Europäisches Patentamt

European Patent Office

Office européen des brevets

(19)

(11) Publication number: **0 100 841**
**B1**

(12) **EUROPEAN PATENT SPECIFICATION**

(45) Date of publication of patent specification: **09.09.87**

(51) Int. Cl.⁴: **G 11 B 5/127**

(21) Application number: **83105933.2**

(22) Date of filing: **16.06.83**

(54) **Integrated magnetic transducer head assembly including an inductive write device and a magnetoresistive read device.**

(30) Priority: **09.08.82 US 407007**

(43) Date of publication of application:
**22.02.84 Bulletin 84/08**

(45) Publication of the grant of the patent:
**09.09.87 Bulletin 87/37**

(84) Designated Contracting States:
**DE FR GB IT**

(56) References cited:
**FR-A-2 282 689**
**US-A-4 195 323**

**PATENTS ABSTRACTS OF JAPAN, vol. 1, no. 76, 21st July 1977, page 1039 E 77**

**PATENTS ABSTRACTS OF JAPAN, vol. 2, no. 13, 28th January 1978, page 10747 E 77**

**PATENTS ABSTRACTS OF JAPAN, vol. 1, no. 143, 22nd November 1977, page 7102 E 77**

**PATENTS ABSTRACTS OF JAPAN, vol. 4, no. 43 (P-5)525r, 4th April 1980, page 70 P 5**

(73) Proprietor: **International Business Machines Corporation**
**Old Orchard Road**
**Armonk, N.Y. 10504 (US)**

(72) Inventor: **Church, Mark Anthony**
**16580 Cypress Way**
**Los Gatos California (US)**
Inventor: **Decker, Stephen Keith**
**5804 Arbur Avenue**
**Edina Minnesota, 55436 (US)**

(74) Representative: **Hobbs, Francis John**
**IBM United Kingdom Limited Intellectual Property Department Hursley Park**
**Winchester Hampshire SO21 2JN (GB)**

(56) References cited:

**IBM TECHNICAL DISCLOSURE BULLETIN, vol. 19, no. 7, December 1976, pages 2430-2431, New York, US S.D. CHEATHAM et al.: "Magnetoresistive head element"**

**PATENTS ABSTRACTS OF JAPAN, vol. 4, no. 95 (P-18)577r, 9th July 1980, page 90 P 18**

## Description

This invention relates to an integrated magnetic transducer head assembly having a thin film inductive write device and a magnetoresistive read device.

In data recording technology, there is a continuing effort to increase data bit packing density and track density. To this end, the magnetic heads and particularly their transducing gaps used for reading and writing have been made smaller in length and width in order to be able to process shorter wavelength or higher frequency data. Thus, thin film heads such as disclosed in U.S.—A—4,190,872 are employed in high data density disk files. In these heads, a multiplicity of thin films are deposited on a substrate but are not disposed in completely parallel layers. The thin films are built up in successive layers, but bends or sloping portions appear adjacent to the edges of some of the layers. These bend portions may cause a break in the continuity of a layer, thereby exposing conductive elements to an electrical shorting condition.

In the effort to enhance read/write heads an integral structure of an inductive thin film write head and a magneto-resistive (MR) sensing read head has been proposed. In some types of integral read/write assemblies employing an MR sensor element, the MR element is deposited over a first thin film pole piece and on part of the transducing gap layer formed between the first pole piece and a second thin film pole piece. In such assemblies, it is necessary to make contact to the MR sensor element with highly conductive continuous nonmagnetic films, made of gold for example. These conductors are extended from the first pole piece to electrical contacts or terminals. However, in such prior art assemblies the conductors are deposited above the first pole piece layer and gap layer and are characterized by curved portions that are prone to break and so lose continuity, thereby causing failure of the head assembly.

A second problem that is encountered with read/write head assemblies of this type involves the shorting of the two conductors that contact the first pole piece layer. During fabrication of the thin gap layer, the edges of the first pole piece layer become exposed as a result of coverage problems caused by missing insulation in the gap layer. Subsequently, when depositing the MR sensor and conductors, a shorting condition occurs between the first pole piece layer and these conductors. Consequently, the MR sensor is electrically bypassed by the first pole piece layer at an overlapping area, so that the device is not operable.

Another problem that occurs in magnetic head assemblies having MR sensors is that of contact resistance between the conductors and the MR sensor. The conductors define the track width of the MR read sensor. The area directly beneath the conductors on the gap surface is the contact area. The MR sensor stripe breaks its continuity at the edge of the first pole piece layer that defines one side of the contact, whereas the conductor width plus any misregistration, defines the other side of the contact. A limited contact area causes variations and increases in resistance that degrade the performance or cause failure of the magnetic head assembly.

The invention seeks to provide an integrated transducer head assembly which does not suffer from the problems discussed above.

It provides an integrated magnetic transducer head assembly consisting of an inductive write device comprising first and second magnetic thin film pole pieces, separated by a non-magnetic transducing gap, said first pole piece being planar, an electrical coil structure, and a read device comprising a planar electrically conductive magnetoresistive element disposed in the transducing gap and conductive elements in electrical contact with the magnetoresistive element, the magnetoresistive element and the conductive elements being disposed within the perimeter of the first pole piece, characterised by the planar first pole piece having a V-like shape and by the conductive elements being of complementary wing-shape and extending over the arms of the V-shaped first pole piece to terminals disposed adjacent to the tips of the V, the upper surfaces of the conductive elements being coplanar from the magnetoresistive element to the terminals, and by the electrical coil structure being disposed on the side of the gap structure remote from the first pole piece.

The invention will now be described by way of example, with reference to the drawings, in which:

FIG. 1 is a rear elevation of an air bearing transducer head slider provided with integral transducer head assemblies according to the invention;

FIG. 2 is a diagrammatic plan view of an integral head assembly, incorporating a thin film inductive write device and an MR sensor read device in accordance with the invention;

FIG. 3 depicts a portion of the head assembly of FIG. 2;

FIG. 4 is a section on line A—A of FIG. 2;

FIG. 5 is an enlargement of the portion 5—5 of FIG. 4;

FIG. 6 is an enlargement of the portion 6—6 of FIG. 5;

FIG. 7 is a section on line B—B of FIG. 2; and

FIG. 8 is an enlargement of the portion 8—8 of FIG. 7.

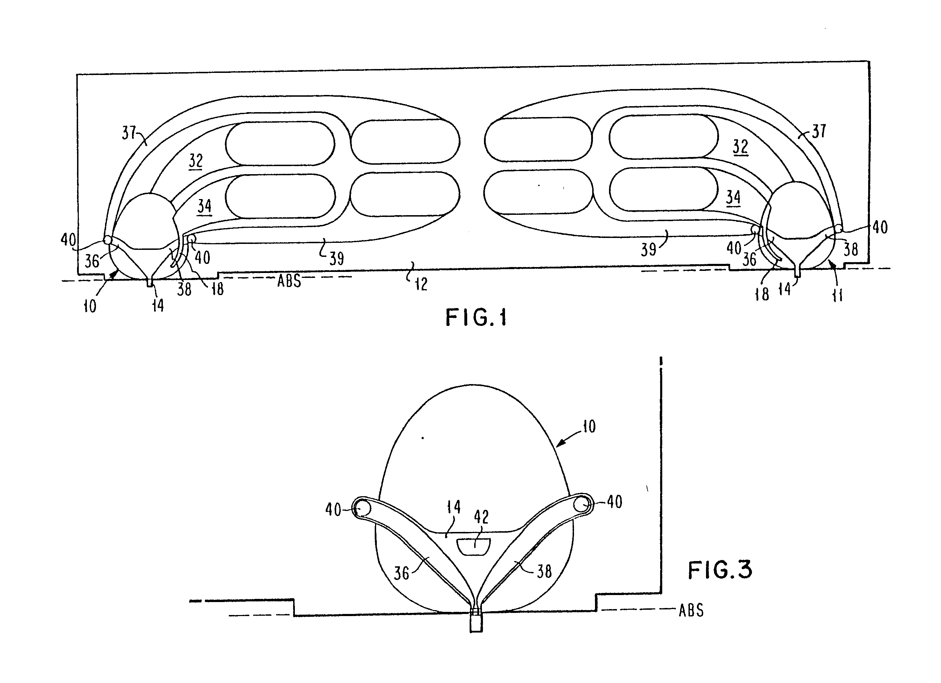

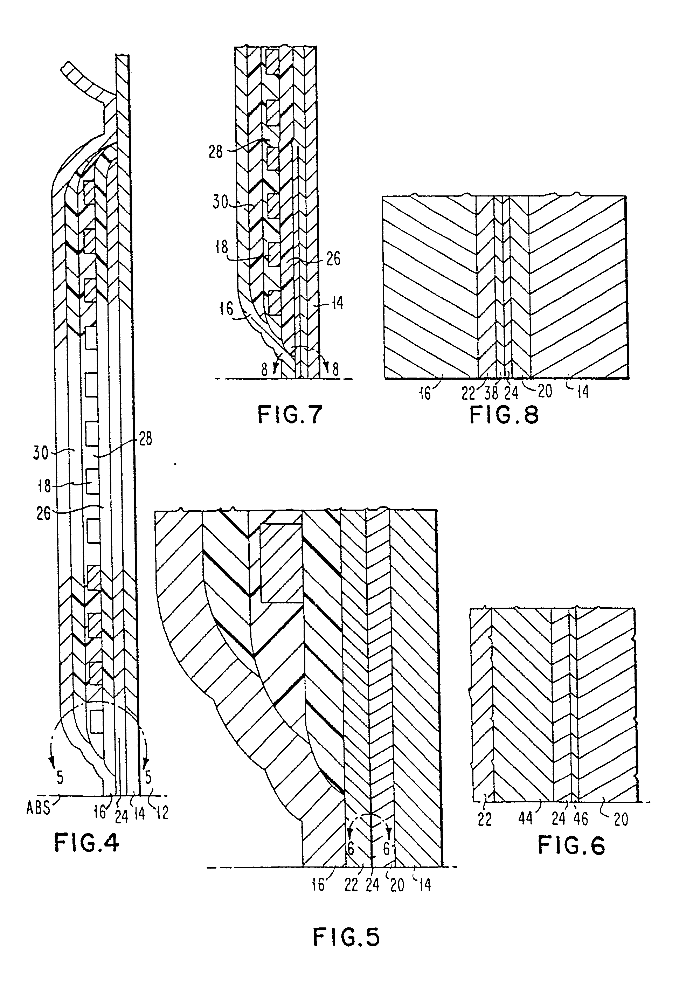

In a preferred implementation of the invention, integrated thin film inductive write and MR devices 10 and 11 (FIG. 1) are disposed at the trailing end of an air bearing slider 12. The inductive write device of each head assembly comprises Permalloy pole pieces 14 and 16 (FIGS. 4 and 5), and an electrical coil 18 formed of several somewhat elliptically shaped turns. The transducing gap of the thin film write element is formed of two adjacent insulator gap layers 20 and 22 disposed between the pole pieces 14 and 16. Between the two gap layers 20 and 22, which may be made of alumina by way of example, is a read device comprising an MR sensor stripe 24.

The head assembly further comprises an insulating layer 26 formed on the gap layer 22. The coil 18 is embedded in an insulating layer 28 that is deposited over the coil and insulating layer 26. An additional insulating layer 30 is provided on top of the insulating layer 28. The pole piece 16 formed on layer 30 completes the magnetic circuit of the write device. Conductors 32 and 34 are provided to direct the input write signal from a write circuit to the coil 18 of the write device.

The write transducing gap formed between the pole pieces 14 and 16, and the read sensor element 24 are located at the air bearing surface (ABS) of the slider substrate 12 for effective recording and reading of data on a magnetic medium.

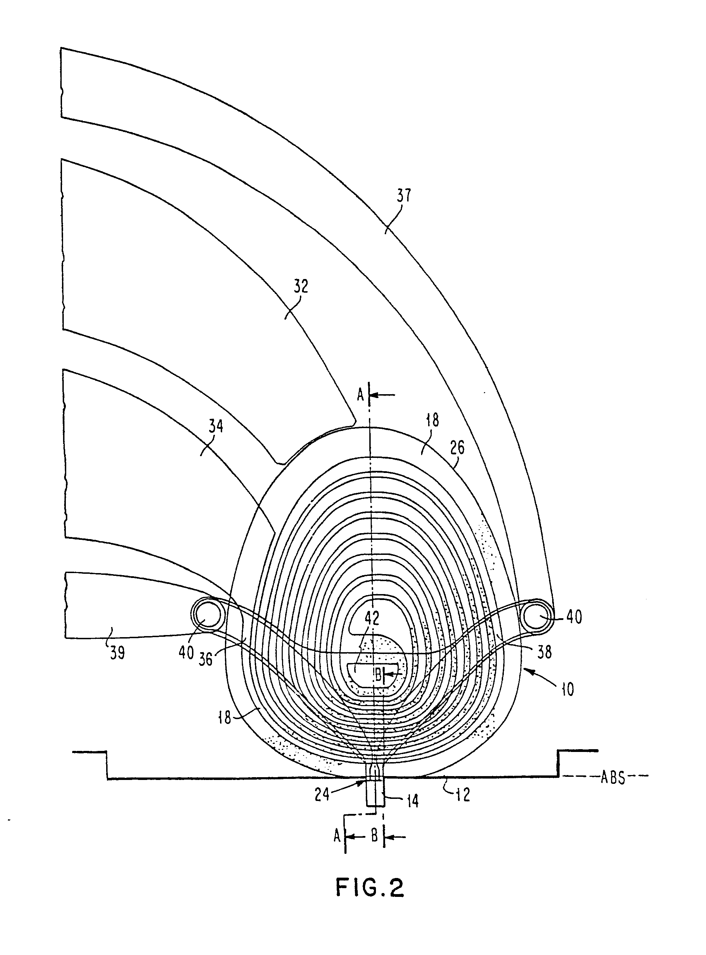

In accordance with the invention, the pole piece 14 and the gap layer 20 are extended into a V-like configuration, thereby providing a planar surface on which wing-shaped conductors 36 and 38 are deposited, as depicted in FIGS. 2 and 3. One end of each of the conductors 36 and 38 is connected to the MR sensor element 24 and the other end of each conductor is connected to a respective terminal 40 from which the signals representing recorded data sensed by the MR element can be passed to readout circuitry.

The conductors 36 and 38 are deposited as coplanar flat surfaces and extend beyond the perimeter of the gap region, thereby enabling contact between the MR sensor element 24 and the conductors 36 and 38.

The read device also includes a bias layer 44 (FIG. 6) which may be made of titanium for example. The bias layer 44 is disposed on top of the Permalloy MR sensor stripe 24. An adhesion-promoting layer of titanium 46 is utilized to enable joining of the MR sensor stripe 24 to the first deposited gap layer 20. The bias layer 44 establishes the electrical current conditions, in relation to the height and thickness of the MR sensor stripe, as is known in the art.

This invention provides an extension of the first pole piece 14 so that a planar conductor path is realized from the MR sensor 24 to the terminals 40, thereby forming a uniform surface on which the MR sensor subassembly is deposited. By virtue of this design, the problems of discontinuous conductors and shorting to the pole piece layer 14 are effectively eliminated. As the geometry of the pole piece 14 is not changed in the area of the magnetic flux path from the back gap closure 42 to the pole tips, the write performance is not affected.

In an implementation of the invention, the length of the write gap was made to be less than 2 microns, and each of the pole pieces 14 and 16 was about 2.5 microns thick. All of the MR sensor material lies within the write transducing gap formed by gap layers 20 and 22. Thus, there is no shorting problem between the first pole piece 14 and the MR sensor 24. Furthermore, the first pole piece 14 and the second pole piece 16 act as shields for the MR read sensor.

With the design set forth herein, a uniform area contact is achieved between the MR sensor and the MR conductors. In this way, it is possible to avoid open circuits and short circuits that may be caused by the deposition of layers on non-planar surfaces. Also, the bilateral symmetry of the design balances the impedance of the two conductors. In addition, manufacturing facility and product yield are enhanced for high density data processing systems.

## Claims

1. An integrated magnetic transducer head assembly consisting of an inductive write device comprising first and second magnetic thin film pole pieces (14, 16), separated by a non-magnetic transducing gap, said first pole piece (14) being planar, an electrical coil structure (18) and a read device comprising a planar electrically conductive magnetoresistive element (24) disposed in the transducing gap and conductive elements (36, 38) in electrical contact with the magnetoresistive element (24), the magnetoresistive element and the conductive elements being disposed within the perimeter of the first pole piece (14), characterised by the planar first pole piece having a V-like shape and by the conductive elements (36, 38) being of complementary wing-shape and extending over the arms of the V-shaped first pole piece (14) to terminals (40) disposed adjacent to the tips of the V, the upper surfaces of the conductive elements being coplanar from the magnetoresistive element to the terminals, and by the electrical coil structure being disposed on the side of the gap structure remote from the first pole piece.

2. An assembly as claimed in claim 1, in which the transducing gap comprises two insulator layers.

3. An assembly as claimed in claim 2, in which the read device is located between the two gap insulator layers.

4. An assembly as claimed in claim 3, including an adhesion-promoting layer of titanium deposited over the first deposited one of the insulator gap layers, the read device being formed on the adhesion-promoting layer.

5. An assembly as claimed in any of claims 2 to 4, including a separation insulator layer disposed between the coil structure and the gap layers, the terminals (40) for said conductive elements being disposed at locations beyond the perimeter of said separation layer.

6. An assembly as claimed in any preceding claim, in which the read device includes a bias layer for determining the electrical current applied to the magnetoresistive element.

7. An assembly as claimed in claim 6, in which the bias layer is made of titanium.

8. An assembly as claimed in any preceding claim, supported on an air bearing slider.

## Patentansprüche

1. Integrierte Magnetwandlerkopfeinheit mit induktiver Schreibvorrichtung mit ersten und zweiten magnetischen Dünnschichtpolstücken (14, 16), die voneinander durch einen umagnetischen Wandlerspalt getrennt sind, wobei das erste Polstück (14) planar ist, weiter mit einer elektrischen Spulenstruktur (18), und mit einer Lesevorrichtung mit einem planaren, elektrischleitenden magnetoresistiven Element (24), das in dem Wandlerspalt angeordnet ist, und mit leitenden Elementen (36, 38) in elektrischem Kontakt mit dem magnetoresistiven Element (24), wobei das magnetoresistive Element und die leitenden Elemente innerhalb des Umfanges des ersten Polstückes (14) angeordnet sind, dadurch gekennzeichnet, daß das planare erste Polstück eine V-förmige Ausbildung hat und die leitenden Elemente (36, 38) eine komplementäre Flügelform aufweisen und sich über die Schenkel des V-förmigen ersten Polstückes (14) zu Anschlüssen (40) erstrecken, die benachbart zu den Oberkanten des V's angeordnet sind, wobei die oberen Flächen der leitenden Elemente koplanar von dem magnetoresistiven Element zu den Anschlüssen sind, und daß die elektrische Spulenstruktur an der Seite der Spaltstruktur abseits liegend von dem ersten Polstück angeordnet ist.

2. Einheit nach Anspruch 1, in welcher der Wandlerspalt zwei Isolierlagen aufweist.

3. Einheit nach Anspruch 2, in welcher die Lesevorrichtung zwischen den zwei Spaltisolierlagen angeordnet ist.

4. Einheit nach Anspruch 3 mit einer Adhäsions-Förderschicht aus über die erste der Spaltisolierlagen abgesetzten Titan, wobei die Lesevorrichtung an der Adhäsions-Förderschicht gebildet ist.

5. Einheit nach einem der Ansprüche 2 bis 4, dadurch gekennzeichnet, daß eine Unterteilungsisolierschicht zwischen der Spulenstruktur und den Spaltisolierlagen angeordnet ist, wobei die Anschlüsse (40) für die genannten leitenden Elemente an Stellen außerhalb des Umfanges der genannten Unterteilungsschicht angeordnet sind.

6. Einheit nach einem der vorhergehenden Ansprüche, dadurch gekennzeichnet, daß die Lesevorrichtung eine Vorspannschicht zur Bestimmung des auf das magnetoresistive Element angewandten Stromes aufweist.

7. Einheit nach Anspruch 6, dadurch gekennzeichnet, daß die Vorspannschicht aus Titan gefertigt ist.

8. Einheit nach einem der vorhergehenden Ansprüche, dadurch gekennzeichnet, daß sie an einem Luftpolsterkopf angeordnet ist.

## Revendications

1. Ensemble de tête de transducteur magnétique intégré comprenant un dispositif d'écriture inductif comprenant des première et seconde pièces polaires magnétiques à couches minces (14, 16) séparées par un entrefer transducteur non magnétique, la première pièce polaire (14) étant plane, une structure d'enroulement électrique (18) et un dispositif de lecture comprenant un élément magnéto-résistif plan électro-conducteur (24) disposé dans l'entrefer transducteur et des éléments conducteurs (36, 38) en contact électrique avec l'élément magnéto-résistif (24), l'élément magnéto-résistif et les éléments conducteurs étant disposés dans le périmètre de la première pièce polaire (14), caractérisé par le fait que la première pièce polaire plane a une forme de V et que les éléments conducteurs (36, 38) ont des formes d'ailes complémentaires et s'étendent sur les bras de la première pièce polaire en forme de V (14) vers des bornes (40) disposées près des extrémités du V, les surfaces supérieures des éléments conducteurs étant coplanaires à partir de l'élément magnéto-résistif jusqu'aux bornes, et par le fait que la structure d'enroulement électrique est disposée du côté de la structure d'entrefer éloigné de la première pièce polaire.

2. Ensemble selon la revendication 1, dans lequel l'entrefer transducteur comprend deux couches isolantes.

3. Ensemble selon la revendication 2, dans lequel le dispositif de lecture est situé entre les deux couches isolantes d'entrefer.

4. Ensemble selon la revendication 3, comprenant une couche favorisant l'adhérence du titane déposée sur la première des couches d'entrefer isolantes déposées, le dispositif de lecture étant formé sur la couche favorisant l'adhérence.

5. Ensemble l'une quelconque des revendications 2 à 4, comprenant une couche isolante de séparation disposée entre la structure d'enroulement et les couches d'entrefer, les bornes (40) des éléments conducteurs étant disposées à des emplacements situés au delà du périmètre de la couche de séparation.

6. Ensemble selon l'une quelconque des revendications précédentes, dans lequel le dispositif de lecture comprend une couche de polarisation pour déterminer le courant électrique appliqué à l'élément magnéto-résistif.

7. Ensemble selon la revendication 6, dans lequel la couche de polarisation est constituée de titane.

8. Ensemble selon l'une quelconque des revendications précédentes, supporté sur un élément coulissant à palier à air.

FIG.1

FIG.3

0 100 841

FIG.2

FIG.7

FIG.8

FIG.4

FIG.5

FIG.6